# EUROPEAN PATENT APPLICATION

(11) **EP 4 129 563 A1**
(43) Date of publication of application: **08.02.2023**
(21) Application number: 21809140.3
(22) Date of filing: 14.05.2021
(51) Int. Cl.: B23K 35/30

(54) **WIRE ROD FOR GAS SHIELDED WELDING WIRE AND GAS SHIELDED WELDING WIRE**

(30) Priority: 18.05.2020 CN 202010418904
(71) Applicant: BAOSHAN IRON & STEEL CO., LTD., Shanghai 201900 (CN)
(72) Inventor: QU, Zhaoxia, Shanghai 201900 (CN); XIA, Liqian, Shanghai 201900 (CN); XING, Yiming, Shanghai 201900 (CN)
(74) Representative: Dr. Weitzel & Partner
(86) International application number: PCT/CN2021/093866
(87) International publication number: WO 2021/233228

(57) **Abstract**

Disclosed is a wire rod for gas shielded welding wire, comprising the following chemical elements in mass percentage: 0<C≤0.03%, 0<S<0.020%, Mn: 0.30-0.70%, Si: 0.30-0.70%, Ti: 0.02-0.07%, Cr: 1.60-2.20%, Ni: 1.6-2.4%, and Cu: 0.20-0.35%. In addition, further disclosed is a gas shielded welding wire, which is made of the above wire rod for gas shielded welding wire. With stable welding arc, low splash and wide applicability, the high-weather-resistance and low-splash wire rod for gas shielded welding wire and the welding wire are suitable for railway passenger trains of all plate thicknesses, especially cold-rolled sheets, and can effectively improve the welding quality of the whole passenger train.

## Description

### TECHNICAL FIELD

The present invention relates to a wire rod for welding wire and a welding wire, in particular to a wire rod for gas shielded welding wire and a welding wire.

### BACKGROUND

Weathering steel is an important class of steel products. With the development of society and the continuous progress of the industry, the variety of the weathering steel is becoming more and more abundant, and a weathering level is getting higher and higher. Today, railway vehicles also use the weathering steel in large quantities. However, high-quality railway passenger trains are made of stainless steel and aluminum alloy materials, and the material cost and manufacturing cost of the two materials are much higher than those of low-alloy weathering steel. Take into account other aspects, a high-weather-resistance product Q350EW is used to make railway passenger trains. The weather resistance of such high-weather-resistance steel is between that of ordinary weathering steel and stainless steel, which can achieve a good balance in terms of economy and service life of railway passenger train bodies.

A steel plate used for the railway passenger train bodies is relatively thin. The thickness of a common hot-rolled plate is 3-6mm, and the thickness of a common cold-rolled plate is 1.5-2.5mm. The use ratio of the hot-rolled plate to the cold-rolled plate is about half to half. For hot-rolled plate welding, a spray transfer welding arc mode or a short-circuit transfer welding arc mode with a large current is mostly used. The hot-rolled plate welding process is relatively stable, and good weld appearance can be obtained in a large welding process window. For cold-rolled sheet welding, the short-circuit transfer method is adopted. Compared with the welding current used in hot rolled steel, the short-circuit welding current used in cold rolled steel is much smaller. Thus, the fluidity of a welding pool is not very good, welding arc stability is poor, and there are also more splashes, resulting in that the final weld appearance is poor.

For the above-mentioned problems in the welding process of thinner plates, the welding process in most of the existing technologies is improved mainly by controlling the current and voltage pulses of a welding power source so as to improve the welding quality of cold-rolled sheets, such as using equipment with an STT or CMT process.

### SUMMARY

One of the objects of the present invention is to provide a high-weather-resistance and low-splash wire rod for gas shielded welding wire. By adjusting the contents of alloying elements and trace elements, the welding process performance of the welding wire applied to cold-rolled sheets is improved. The manufactured wire rod for gas shielded welding wire has excellent comprehensive mechanical properties under the premise of high weather resistance, exhibits a stable welding arc, low splash rate and wide applicability, is suitable for railway passenger trains of all plate thicknesses, especially cold-rolled sheets, and can effectively improve the welding quality of the whole passenger train.

In order to achieve the above object, the present invention provides a high-weather-resistance and low-splash wire rod for gas shielded welding wire, comprising the following chemical elements in mass percentage: 0<C≤0.03%, 0<S≤0.020%, Mn: 0.30-0.70%, Si: 0.30-0.70%, Ti: 0.02-0.07%, Cr: 1.60-2.20%, Ni: 1.6-2.4%, and Cu: 0.20-0.35%.

Preferably, the wire rod for gas shielded welding wire according to the present invention comprises the following chemical elements in mass percentage: 0<C≤0.03%, 0<S≤0.020%, Mn: 0.30-0.70%, Si: 0.30-0.70%, Ti: 0.02-0.07%, Cr: 1.60-2.20%, Ni: 1.6-2.4%, Cu: 0.20-0.35%, and the balance being Fe and unavoidable impurities.

In the technical solution of the present invention, the wire rod for gas shielded welding wire is used in a welding state. In order to achieve high weather resistance and excellent comprehensive mechanical properties, the alloy composition is designed as follows:
C: In the high-weather-resistance and low-splash wire rod for gas shielded welding wire according to the present invention, if the mass percentage of C is increased, the splash of the welding wire will increase, and at the same time, the strength of the deposited metal will also increase, resulting in a decrease in the elongation of the wire rod for welding wire. Therefore, in the high-weather-resistance and low-splash wire rod for gas shielded welding wire according to the present invention, the mass percentage of C is controlled to be 0<C≤0.03%.
S: In the high-weather-resistance and low-splash wire rod for gas shielded welding wire according to the present invention, S element can significantly improve the welding process performance of welding materials, reduce splash, and increase the spreadability of molten droplets. However, it should be noted that the mass percentage of S should not be too high; otherwise, the purity of the material will be affected, thereby reducing the low-temperature impact toughness of the deposited metal. Therefore, in the high-weather-resistance and low-splash wire rod for gas shielded welding wire according to the present invention, the mass percentage of S is controlled to be 0<S≤0.020%.
Mn: In the high-weather-resistance and low-splash wire rod for gas shielded welding wire according to the present invention, Mn is a deoxidizing element. If the mass percentage of Mn is too low, splash will increase and the arc stability will be affected. However, it should be noted that when the mass percentage of Mn is too high, the strength of the deposited metal will increase and the plastic toughness will deteriorate. Therefore, in the high-weather-resistance and low-splash wire rod for gas shielded welding wire according to the present invention, the mass percentage of Mn is controlled to be 0.30-0.70%.
Si: In the high-weather-resistance and low-splash wire rod for gas shielded welding wire according to the present invention, Si is a deoxidizing element. If the mass percentage of Si is too low, splash will increase and the arc stability will be affected; but if the mass percentage of Si is too high, the strength will increase due to solid solution strengthening, which will affect the toughness of the deposited metal. Therefore, in the high-weather-resistance and low-splash wire rod for gas shielded welding wire according to the present invention, the mass percentage of Si is controlled to be 0.30-0.70%.
Ti: In the high-weather-resistance and low-splash wire rod for gas shielded welding wire according to the present invention, Ti mainly plays the role of deoxidation and denitrification in a weld metal. A certain amount of Ti can significantly improve the welding process performance of the welding wire and reduce splash; however, excessive Ti will greatly increase the strength of the weld metal and reduce the elongation. Therefore, in the high-weather-resistance and low-splash wire rod for gas shielded welding wire according to the present invention, the mass percentage of Ti is controlled to be 0.02-0.07%.
Cr: In the high-weather-resistance and low-splash wire rod for gas shielded welding wire according to the present invention, Cr element can promote the formation of more α-FeOOH and is one of the main weather resistant elements. The Cr element can not only promote the composition of an inner rust layer close to a base metal to change to a thermodynamically stable state, but also promote a rust layer to form a sheet-like dense structure, which reduces the electrical conductivity of the rust layer. However, it should be noted that when the mass percentage of Cr is too high, it is detrimental to the performance of the deposited metal. Therefore, in the high-weather-resistance and low-splash wire rod for gas shielded welding wire according to the present invention, the mass percentage of Cr is controlled to be 1.60-2.20%.
Ni: In the high-weather-resistance and low-splash wire rod for gas shielded welding wire according to the present invention, Ni is one of the main weather resistant elements. Adding a certain amount of Ni can reduce the hot brittleness tendency of Cu; and with the increase of the Ni content, the low-temperature toughness of the weld metal tends to be stable. However, if the content of Ni element is too high, the cost will be too high, and it will also be detrimental to the processability of the welding wire. Therefore, in the high-weather-resistance and low-splash wire rod for gas shielded welding wire according to the present invention, the mass percentage of Ni is controlled to be 1.6-2.4%.
Cu: In the high-weather-resistance and low-splash wire rod for gas shielded welding wire according to the present invention, Cu is one of the main weather resistant elements. A certain amount of copper helps to form a dense protective rust layer on the surface of a steel plate, and makes the steel plate have better weather resistance in a humid environment. The combined use of Cu and Cr elements achieves better weather resistance, and the combined use of Cu and Ni elements can reduce the hot brittleness tendency. Therefore, in the high-weather-resistance and low-splash wire rod for gas shielded welding wire according to the present invention, the mass percentage of Cu is controlled to be 0.20-0.35%.

Preferably, in the wire rod for gas shielded welding wire according to the present invention, the content of S element in mass percentage is 0.002-0.012%, and the S content in such range can achieve a better balance between the welding process performance and the welding quality.

Preferably, in the wire rod for gas shielded welding wire according to the present invention, the contents of Ca element and Al element in mass percentage are controlled to be 0<Ca≤0.0014% and/or 0<Al≤0.015%, preferably 0<Ca≤0.0014% and 0<Al≤0.015%.

The wire rod for gas shielded welding wire according to the present invention may further comprise Ca and Al elements. The addition of Ca element and/or Al element is to ensure smooth continuous casting of weld wire steel. If the content of the Ca element in the wire rod for gas shielded welding wire is too high, the splash of the welding wire will increase and the welding process performance will reduce. Under the premise of ensuring the smooth production of the wire rod for welding wire, the content of the Ca element should be as low as possible. Therefore, in the technical solution of the present invention, the mass percentage of Ca is controlled to be 0<Ca≤0.0014%.

Accordingly, in the wire rod for gas shielded welding wire according to the present invention, the mass percentage of Al is controlled to be 0<Al≤0.015%. If the content of the Al element is too high, high-melting-point inclusions will increase, which will not only reduce the plasticity of the wire rod for welding wire and have a great influence on the yield of the wire rod for welding wire drawn into fine wires, but also reduce the stability of the welding process. Therefore, the content of the Al element in the wire rod for gas shielded welding wire should be as low as possible, so that good impact toughness can also be easily obtained.

Preferably, in the wire rod for gas shielded welding wire according to the present invention, P, O and N elements are unavoidable impurities, and the contents of P, O and N elements in mass percentage are controlled to be: P≤0.015%, 0≤0.0060%, and N≤0.0070%.

For the above technical solution, in the wire rod for gas shielded welding wire according to the present invention, the P, O and N elements are all unavoidable impurity elements, and the contents of the P, O and N elements in the wire rod for gas shielded welding wire should be as low as possible. A lower mass percentage of impurity elements in the steel will make the steel be purer, the splash of welding wire be less, and the plasticity and low-temperature toughness of the deposited metal be better.

Preferably, in the wire rod for gas shielded welding wire according to the present invention, the contents of chemical elements further satisfy: C×P×10⁴≤4, wherein C and P represent the numerical values of the mass percentages of corresponding chemical elements, i.e., the numbers before the symbol "%" of the mass percentages of corresponding elements.

For the above technical solution, in the wire rod for gas shielded welding wire according to the present invention, while controlling the mass percentage of a single chemical element, controlling the technical feature of C×P×10⁴≤4 can further ensure that the wire rod for gas shielded welding wire of the present invention has good welding process performance.

Preferably, in the wire rod for gas shielded welding wire according to the present invention, a weather resistance index I and the contents of involved elements in mass percentage satisfy: I=26.01Cu+3.88Ni+1.20Cr+1.49Si+17.28P-7.29Cu×Ni-9.10Ni×P-33.39Cu²≥10.

In the wire rod for gas shielded welding wire according to the present invention, the level of weather resistance can be described by the weather resistance index formula. The weather resistance index I and the contents of involved elements in mass percentage satisfy I=26.01Cu+3.88Ni+1.20Cr+1.49Si+17.28P-7.29Cu×Ni-9.10Ni×P-33.39Cu², wherein Cu, Ni, Cr, Si, P and Ni represent the numerical values of the mass percentages of corresponding elements, that is, the numbers before the symbol "%" of the mass percentages of corresponding elements. For example, if the mass percentage of Cu is 0.35%, the corresponding value substituted is 0.35 when it is substituted into the formula. In the above technical solution, controlling the weather resistance index I to be 10 or more can effectively ensure that the wire rod of the present invention has high weather resistance. Generally speaking, the weather resistance index I of high-weather-resistance steel is usually not more than 15. The weather resistance index I is usually distributed between 10 and 12 in the solution provided in the present application.

Preferably, for the wire rod for gas shielded welding wire according to the present invention, the deposited metal therefrom has a microstructure of mixed bainite+mixed ferrite, wherein the mixed ferrite has a phase ratio of 10%-30%, the mixed bainite includes granular bainite, upper bainite, lower bainite and massive bainite, and the mixed ferrite includes ferrite with secondary phase, grain boundary ferrite, acicular ferrite and massive ferrite.

Preferably, the wire rod for gas shielded welding wire according to the present invention has a splash rate of less than 2%. The minimum value of the splash rate is 0, i.e., no splash. In the technical solution provided in the present application, a smaller splash rate is desired.

Preferably, in the wire rod for gas shielded welding wire according to the present invention, the deposited metal therefrom has a yield strength ReL of 350 MPa or more, generally not more than 550 MPa, a tensile strength Rm of 500 MPa or more, generally not more than 690 MPa, an elongation A of 18% or more, and an impact energy Akv at -40°C of 47 J or more.

Accordingly, another object of the present invention is to provide a gas shielded welding wire. The gas shielded welding wire is suitable for welding of high-weather-resistance steel Q350EW or similar products, and also suitable for welding of high-weather-resistance welded structural steel of a common strength grade (a tensile strength grade of 50kg), and can be effectively used in railway passenger trains, railway freight trains, high-speed trains, subways, and other high-weather-resistance applications.

In order to achieve the above object, the present invention provides a high-weather-resistance and low-splash gas shielded welding wire, which is manufactured from the above wire rod for gas shielded welding wire.

It should be noted that when using the gas shielded welding wire of the present invention for welding, a welding gas used can be a binary gas mixture of argon and carbon dioxide, a binary gas mixture of argon and oxygen, a ternary gas mixture of argon, carbon dioxide and oxygen, or other multi-component gas. Preferably, in the binary gas mixture of argon and carbon dioxide, the gas ratio of argon and carbon dioxide may be 82%Ar+18%CO₂.

The high-weather-resistance and low-splash wire rod for gas shielded welding wire and the welding wire according to the present invention have the following advantages and beneficial effects:
In the present invention, by adjusting the content of alloying elements and trace elements, the welding process performance of the welding wire applied to cold-rolled sheets is improved. The manufactured high-weather-resistance and low-splash wire rod for gas shielded welding wire has excellent comprehensive mechanical properties under the premise of high weather resistance, exhibits a stable welding arc, low splash and wide applicability, is suitable for railway passenger trains of all plate thicknesses, especially cold-rolled sheets, and can effectively improve the welding quality of the whole passenger train.

The deposited metal formed from the high-weather-resistance and low-splash wire rod for gas shielded welding wire of the present invention has high weather resistance and comprehensive mechanical properties, and the deposited metal therefrom has a yield strength ReL of 350-550MPa, a tensile strength Rm of 500-690MPa, an elongation A of 18% or more, and an impact energy Akv at -40°C of 47J or more.

Accordingly, the high-weather-resistance and low-splash gas shielded welding wire according to the present invention also has the above advantages and beneficial effects.

### BRIEF DESCRIPTION OF DRAWINGS

Fig. 1 shows the macroscopic metallographic structure of the deposited metal formed from the high-weather-resistance and low-splash gas shielded welding wire in Example 1.
Figs. 2, 3 and 4 respectively show the metallographic structures of coarse columnar grains of the deposited metal formed from the high-weather-resistance and low-splash gas shielded welding wire in Example 1 under different magnifications.
Figs. 5, 6 and 7 respectively show the metallographic structures of fine HAZ (heat affected zone) parts between columnar grains of the deposited metal formed from the high-weather-resistance and low-splash gas shielded welding wire in Example 1 under different magnifications.
Fig. 8 shows the microstructure of coarse columnar grains in a covering layer of the deposited metal formed from the high-weather-resistance and low-splash gas shielded welding wire in Example 2.

### DETAILED DESCRIPTION

The high-weather-resistance and low-splash wire rod for gas shielded welding wire and the welding wire according to the present invention will be further explained and described below in connection with the specific examples and the accompanying drawings. However, the explanation and description do not constitute an improper limitation to the technical solution of the present invention.

### Examples 1-6

The gas shielded welding wires in Examples 1-6 are manufactured by the following steps:
(1) In accordance with the chemical composition in Table 1, a steel ingot was obtained by smelting and continuous casting or mold casting; wherein during smelting, three 50kg vacuum induction furnaces and two 150t electric furnaces were used.
(2) The steel ingot was hot-rolled into a wire rod of ϕ5.5mm.
(3) The wire rod was subjected to rough drawing, intermediate annealing, finishing drawing and copper plating to finally obtain welding wires of ϕ1.0mm and ϕ1.2mm.

Table 1 lists the mass percentages of chemical elements of welding wires and wire rods provided in Examples 1-6.

**Table 1 (the balance being Fe and other unavoidable impurities besides P, O and N)**

| No. | C | Si | Mn | Cr | Ni | Cu | Ti | S | P | Ca | Al | O | N | C×P×10⁴ | I |
|---|---|---|---|---|---|---|---|---|---|---|---|---|---|---|---|
| Example 1 | 0.008 | 0.30 | 0.59 | 2.2 | 1.6 | 0.28 | 0.070 | 0.015 | 0.011 | 0.0006 | 0.015 | 0.0030 | 0.0044 | 0.88 | 10.7 |
| Example 2 | 0.02 | 0.46 | 0.70 | 1.6 | 2.2 | 0.35 | 0.041 | 0.012 | 0.008 | 0.0010 | 0.012 | 0.0050 | 0.0052 | 1.6 | 10.5 |
| Example 3 | 0.01 | 0.55 | 0.30 | 1.8 | 2.4 | 0.25 | 0.035 | 0.020 | 0.007 | 0.0014 | 0.008 | 0.0039 | 0.0036 | 0.7 | 12.3 |
| Example 4 | 0.02 | 0.70 | 0.41 | 2.0 | 2.0 | 0.30 | 0.062 | 0.010 | 0.015 | 0.0012 | 0.010 | 0.0040 | 0.0060 | 3.0 | 11.6 |
| Example 5 | 0.03 | 0.60 | 0.53 | 1.8 | 1.8 | 0.20 | 0.020 | 0.006 | 0.010 | 0.0011 | 0.011 | 0.0048 | 0.0048 | 3.0 | 11.2 |
| Example 6 | 0.02 | 0.65 | 0.55 | 1.9 | 1.9 | 0.26 | 0.05 | 0.003 | 0.008 | 0.0009 | 0.009 | 0.006 | 0.007 | 1.6 | 11.5 |

| | | | | | | | | | | | | | | | |
|---|---|---|---|---|---|---|---|---|---|---|---|---|---|---|---|
| Note: Weather resistance index I=26.01Cu+3.88Ni+1.20Cr+1.49Si+17.28P-7.29Cu×Ni-9.10Ni×P-33.39Cu² | | | | | | | | | | | | | | | |

The deposited metal test of the argon-rich gas shielded welding wire was carried out by using a plate thickness of 20 mm, a groove form of 60° single-sided V-shaped butt and a bottom surface gap of 12 mm, wherein a gas ratio was 82%Ar+18%CO₂, preheating was not performed before welding, and the inter-pass temperature was controlled to about 150°C. During welding, the gas shielded welding wires in the examples exhibited stable arc, good spreadability, very little splash, and good weld appearance, and can be used for all-position welding. Subsequently, the deposited metals formed from the gas shielded welding wires in Examples 1-6 were subjected to a tensile test and an impact test, and the welding wires were subjected to a splash rate test. The splash rate was tested in accordance with the test standard in GB/T 25776-2010 "Qualification Methods of Welding Procedure for Welding Consumables". The results are listed in Table 2.

**Table 2**

| No. | Rel (MPa) | Rm (MPa) | A (%) | Akv at -40°C* (J) | Splash rate (%) |
|---|---|---|---|---|---|
| Example 1 | 525 | 615 | 20 | 68 | 1.6 |
| Example 2 | 465 | 580 | 22 | 61 | 0.9 |
| Example 3 | 420 | 560 | 21 | 54 | 0.5 |
| Example 4 | 490 | 590 | 18 | 73 | 1.3 |
| Example 5 | 515 | 600 | 20 | 65 | 0.6 |
| Example 6 | 550 | 643 | 25 | 104 | 0.7 |

| | | | | | |
|---|---|---|---|---|---|
| Note: The numerical value of Akv at -40°C* is the average value of impact values of CVN (Charpy V-notch) test of five deposited metal samples. | | | | | |

As can be seen from Table 2, the deposited metals formed from the gas shielded welding wire in the examples of the present invention exhibited a yield strength ReL of 350-550 MPa, a tensile strength Rm of 500-690 MPa, an elongation A of 18% or more, and an impact energy Akv at -40°C of 47 J or more. In addition, the gas shielded welding wire in the examples of the present invention exhibited a splash rate of less than 2% during conventional mixed gas shielded welding. The splash rate was low, and the process effect was good. And it can be seen in connection with Table 1 that the weather resistance index I in the examples is 10 or more.

In accordance with the standard TB/T2375 "Test method for periodic immersion corrosion of weathering steel for railway", a corrosion test was carried out on the deposited metals formed from the gas shielded welding wires in Examples 1-6. The comparison sample for the deposited metal samples was Q350EW, a new high weathering steel for railway passenger trains. The corrosion test was carried out for 72 h. The test results are listed in Table 3.

**Table 3**

| No. | Corrosion weight loss (g/m²) | Corrosion weight loss rate (g/m²/h) | Relative corrosion rate (%) |
|---|---|---|---|
| Example 1 | 100 | 1.39 | 2.0 |
| Example 2 | 101 | 1.4 | 3.0 |
| Example 3 | 97 | 1.35 | 1.0 |
| Example 4 | 99 | 1.38 | 1.0 |
| Example 5 | 100 | 1.39 | 2.0 |
| Example 6 | 98 | 1.36 | 0 |
| Base metal Q350EW | 98 | 1.36 | - |

| | | | |
|---|---|---|---|
| Note: Relative corrosion rate = \|corrosion weight loss of base metal - corrosion weight loss of deposited metall / corrosion weight loss of base metal × 100% | | | |

It can be seen from Tables 2 and 3 that upon the gas shielded welding wires were welded, the comprehensive mechanical properties and corrosion resistance of the deposited metal from the welding wire in the examples of the present invention were comparable to those of the welding base metal Q350EW (wherein the comprehensive mechanical properties meted the standards of Q350EW; and in the field, a difference of corrosion resistance within 10% is considered to be comparable to Q350EW), and the gas shielded welding wires were also suitable for the welding of high-weather-resistance welded structural steel of a common strength grade (a tensile strength grade of 50kg). Thus, it can be seen that the gas shielded welding wires in Examples 1-6 of the present invention have stable welding arc, low splash rate and wide applicability, and can be effectively used in railway passenger trains, railway freight trains, high-speed trains, subways, and other high-weather-resistance applications.

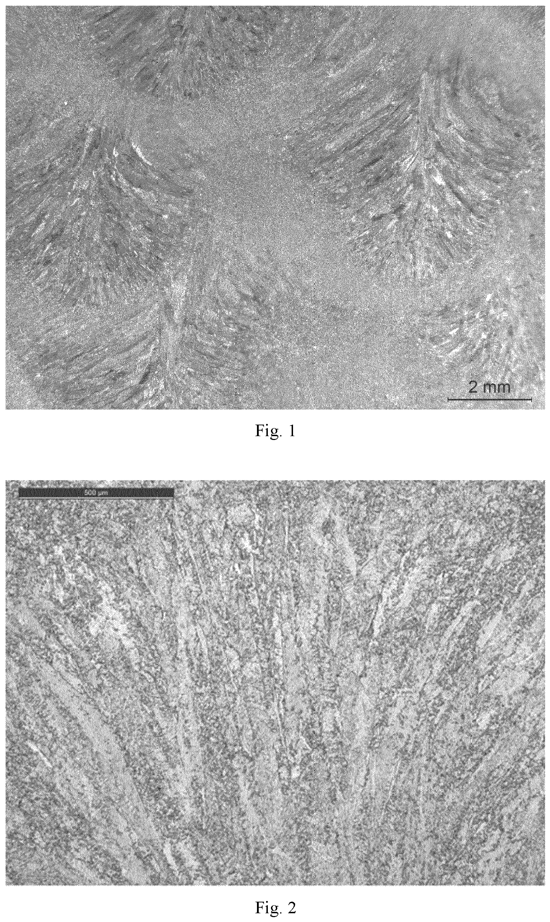

Fig. 1 shows the macroscopic metallographic structure of the deposited metal formed from the high-weather-resistance and low-splash gas shielded welding wire in Example 1.

As shown in Fig. 1, the macroscopic metallographic structure of the deposited metal consists mainly of coarse columnar grains and fine HAZ (heat affected zone) parts between columnar grains.

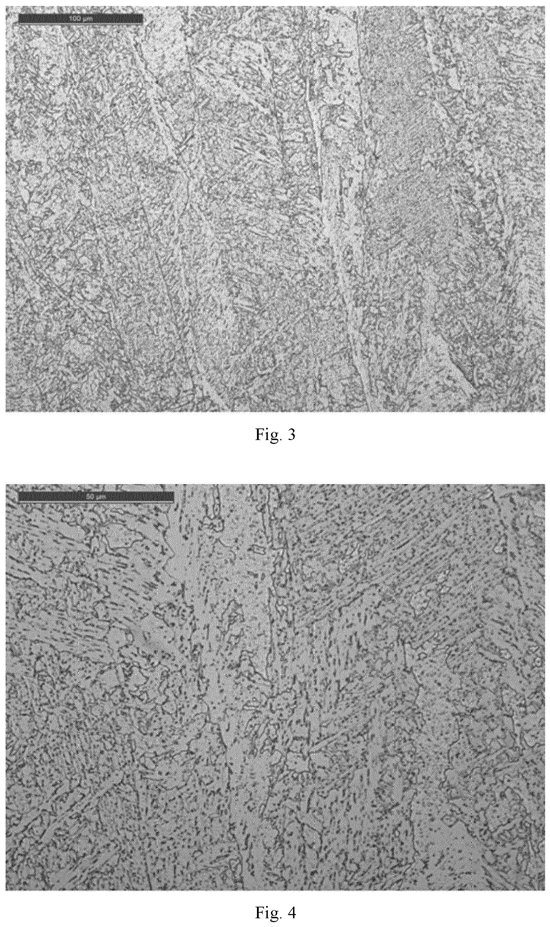

Figs. 2, 3 and 4 respectively show the metallographic structures of coarse columnar grains of the deposited metal formed from the high-weather-resistance and low-splash gas shielded welding wire in Example 1 under different magnifications.

It can be seen from Figs. 2, 3 and 4 that the microstructure of the deposited metal formed from the high-weather-resistance and low-splash gas shielded welding wire includes lower bainite, granular bainite, ferrite with linearly arranged secondary phases, grain boundary ferrite (GBF), and massive ferrite.

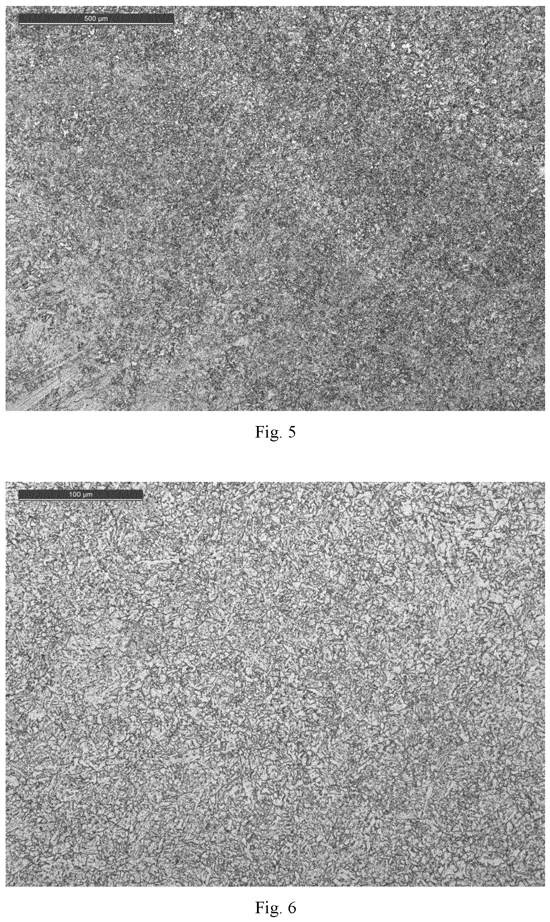

Figs. 5, 6 and 7 respectively show the metallographic structures of fine HAZ (heat affected zone) parts between columnar grains of the deposited metal formed from the high-weather-resistance and low-splash gas shielded welding wire in Example 1 under different magnifications.

It can be seen from Figs. 5, 6 and 7 that the structure of the fine HAZ (heat affected zone) parts between columnar grains of the deposited metal formed from the high-weather-resistance and low-splash gas shielded welding wire includes granular bainite, ferrite with secondary phase and massive ferrite.

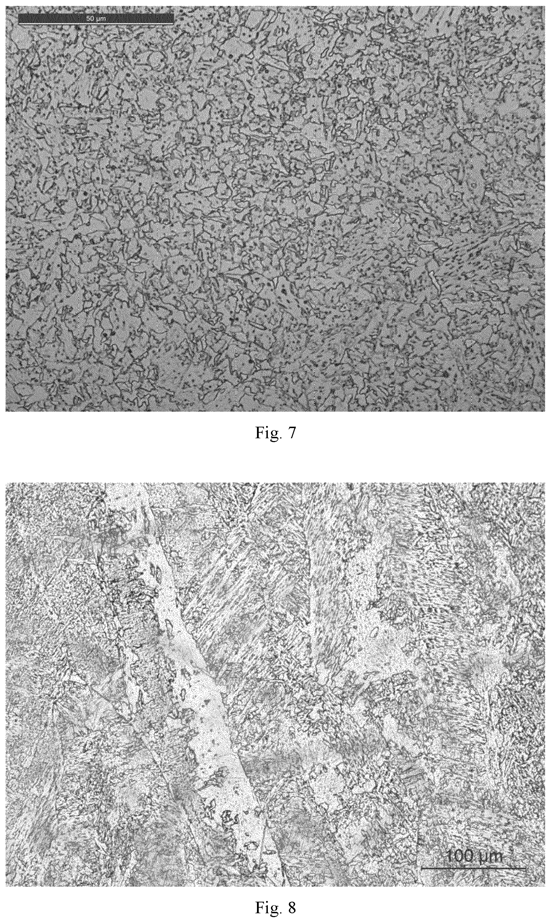

Fig. 8 shows the microstructure of coarse columnar grains in a covering layer of the deposited metal formed from the high-weather-resistance and low-splash gas shielded welding wire in Example 2.

As can be seen in Fig. 8, the coarse columnar grains in the covering layer of the deposited metal formed from the high-weather-resistance and low-splash gas shielded welding wire in Example 2 are composed of upper bainite, lower bainite, massive bainite, grain boundary ferrite (GBF), and acicular ferrite.

It can be seen from Figs. 1 to 8 that the microstructure of the deposited metal formed from the high-weather-resistance and low-splash gas shielded welding wire of the present invention is mixed bainite+mixed ferrite, wherein the mixed ferrite has a phase ratio of 10%-30%, and wherein the mixed bainite includes granular bainite, upper bainite, lower bainite, and massive bainite, and the mixed ferrite includes ferrite with secondary phase, grain boundary ferrite, acicular ferrite, and massive ferrite.

It should be noted that for the prior art part of protection scope of the present disclosure, it is not limited to the examples given in this application document. All the prior arts that do not contradict with the present disclosure, including but not limited to prior patent documents, prior publications, prior public use, etc., can be included in the protection scope of the present disclosure.

In addition, the combination of various technical features in the present disclosure is not limited to the combination described in the claims or the combination described in specific embodiments. All the technical features described in the present disclosure can be freely combined or combined in any way unless there is a contradiction between them.

It should also be noted that the above-listed Examples are only specific embodiments of the present disclosure. Apparently, the present disclosure is not limited to the above embodiments, and similar variations or modifications that are directly derived or easily conceived from the present disclosure by those skilled in the art should fall within the scope of the present disclosure.

## Claims

1. A wire rod for gas shielded welding wire, comprising the following chemical elements in mass percentage:
0<C≤0.03%, 0<S<0.020%, Mn: 0.30-0.70%, Si: 0.30-0.70%, Ti: 0.02-0.07%, Cr: 1.60-2.20%, Ni: 1.6-2.4%, and Cu: 0.20-0.35%.

2. The wire rod for gas shielded welding wire according to claim 1, comprising the following chemical elements in mass percentage:
0<C≤0.03%, 0<S≤0.020%, Mn: 0.30-0.70%, Si: 0.30-0.70%, Ti: 0.02-0.07%, Cr: 1.60-2.20%, Ni: 1.6-2.4%, Cu: 0.20-0.35%, and the balance being Fe and unavoidable impurities.

3. The wire rod for gas shielded welding wire according to claim 1 or 2, wherein the content of S element in mass percentage is 0.002-0.012%.

4. The wire rod for gas shielded welding wire according to claim 1 or 2, wherein the wire rod for welding wire further comprises 0<Ca≤0.0014% and/or 0<Al≤0.015%.

5. The wire rod for gas shielded welding wire according to claim 2, wherein P, O and N elements in the wire rod for welding wire are unavoidable impurities, and the contents of P, O and N elements in mass percentage are controlled to be: P≤0.015%, 0≤0.0060%, and N≤0.0070%.

6. The wire rod for gas shielded welding wire according to claim 5, wherein the wire rod for welding wire further satisfies: C×P×10⁴≤4, wherein C and P represent the mass percentages of corresponding elements in the wire rod for welding wire.

7. The wire rod for gas shielded welding wire according to claim 5, wherein the wire rod for welding wire has a weather resistance index I=26.01Cu+3.88Ni+1.20Cr+1.49Si+17.28P-7.29Cu×Ni-9.10Ni×P-33.39Cu²≥10, wherein Cu, Ni, Cr, Si and P represent the mass percentages of corresponding elements in the wire rod for welding wire.

8. The wire rod for gas shielded welding wire according to claim 1 or 2, wherein a deposited metal from the wire rod for welding wire has a microstructure of mixed bainite+mixed ferrite, wherein the mixed ferrite has a phase ratio of 10%-30%, the mixed bainite comprises granular bainite, upper bainite, lower bainite and massive bainite, and the mixed ferrite comprises ferrite with secondary phase, grain boundary ferrite, acicular ferrite and massive ferrite.

9. The wire rod for gas shielded welding wire according to claim 1 or 2, wherein the wire rod for welding wire has a splash rate of less than 2%.

10. The wire rod for gas shielded welding wire according to claim 1 or 2, wherein a deposited metal from the wire rod for welding wire has a yield strength ReL of 350 MPa or more, a tensile strength Rm of 500 MPa or more, an elongation A of 18% or more, and an impact energy Akv at -40°C of 47 J or more.

11. A gas shielded welding wire, manufactured from the wire rod for gas shielded welding wire according to any one of claims 1 to 10.

12. The gas shielded welding wire according to claim 10, wherein a deposited metal from the gas shielded welding wire has a microstructure of mixed bainite+mixed ferrite, wherein the mixed ferrite has a phase ratio of 10%-30%, the mixed bainite comprises granular bainite, upper bainite, lower bainite and massive bainite, and the mixed ferrite comprises ferrite with secondary phase, grain boundary ferrite, acicular ferrite and massive ferrite.

13. The gas shielded welding wire according to claim 10, wherein the gas shielded welding wire has a splash rate of less than 2%.

14. The gas shielded welding wire according to claim 10, wherein a deposited metal from the gas shielding welding wire has a yield strength ReL of 350 MPa or more, a tensile strength Rm of 500 MPa or more, an elongation A of 18% or more, and an impact energy Akv at -40°C of 47 J or more.
